# EUROPÄISCHE PATENTANMELDUNG

(11) **EP 0 892 479 A1**
(43) Veröffentlichungstag der Anmeldung: **20.01.1999**
(21) Anmeldenummer: 98112828.3
(22) Anmeldetag: 10.07.1998
(51) Int. Cl.: H02G 3/26

(54) **Vorrichtung zum Führen einer Leitung**

(30) Priorität: 17.07.1997 DE 29712618 U
(71) Anmelder: Erich Keller AG, 8583 Sulgen (CH)
(72) Erfinder: Keller, Erich, 9565 Bussnang (CH)
(74) Vertreter: Weiss, Peter, Dr.

(57) **Zusammenfassung**

Bei einer Vorrichtung zum Führen einer Leitung (1), insbesondere eines Kabels (2), sind zumindest zwei benachbarte Schlitze (5.1, 5.2) zur Aufnahme der Leitung vorgesehen.

## Beschreibung

Die Erfindung betrifft eine Vorrichtung zum Führen einer Leitung, insbesondere eines Kabels.

Zum Führen von Leitungen, insbesondere von Elektro-, Coax- oder Datenträgerkabel sind Kabelkanäle bekannt, die beispielsweise an der Wand oder an einem Schreibtisch geführt werden. Zum Einlegen dieses Kabels wird ein Deckel des Kabelkanals geöffnet, so dass das Kabel in dem Kabelkanal aufgenommen werden kann.

Bekannt sind auch an einem Halter einhangbare Kabelbügel, über die das Kabel einfach gelegt wird. Zum Festlegen des Kabels wird dieses meist an dem Kabelbügel verknotet.

Derartige Vorrichtungen haben den Nachteil, dass zum einen das Kabel geknickt wird, was insbesondere bei Datenträgerkabeln sehr unerwünscht ist. Zum anderen müssen diese Kabel, sofern ein Zug auf sie einwirkt, diesen Zug selbst auffangen, was zu Beschädigungen des Kabels führen kann.

Der vorliegenden Erfindung liegt die Aufgabe zugrunde, eine Vorrichtung der oben genannten Art zu entwickeln, welche eine Beschädigung des Kabels, sei es durch Zug oder durch Knicken, vermeidet.

Zur Lösung dieser Aufgabe führt, dass zumindest zwei benachbarte Schlitze zur Aufnahme der Leitung vorgesehen sind.

Das Kabel wird in Gebrauchslage in diese beiden benachbarten Schlitze eingelegt, so dass das Kabel nur wellenförmig gekrümmt wird, was auch zu einem gewissen Klemmen in den Schlitzen führt. Hierdurch wird das Kabel im wesentlichen festgelegt, ohne dass es geknickt wird. Auch wenn ein Zug auf das Kabel einwirkt, braucht dieser Zug nicht von der ganzen Länge des Kabels aufgefangen zu werden, sondern der Zug wird durch die Schlitzreihe unterbrochen.

Bevorzugt sollen die Schlitze entgegengesetzt geöffnet sein. D.h., das Kabel wird nicht etwa nur um einen Steg herumgelegt, sondern zwischen benachbarten Stegen hindurchgefädelt. Hierdurch erfolgt eine besonders enge Anlage an den Steg, wobei diese Stege sogar teilweise umschlungen werden, was die Reibung zwischen Steg und Kabel erhöht. Vor allem gilt dies dann, wenn der Steg beispielsweise mit einer Kunststoffschicht belegt ist und auch das Kabel einen Kunststoffmantel aufweist.

Bevorzugt besteht die gesamte Vorrichtung zum Führen einer Leitung aus einem einstückigen Draht, der entsprechend gebogen ist. Durch wellenförmiges Verbiegen entsteht die oben erwähnte Reihe von benachbarten Schlitzen, die insgesamt eine Schlitzreihe ausbilden. Durch diese Schlitze hindurch wird das Kabel gefädelt.

Von der Schlitzreihe ragt beidseits jeweils ein Drahtstück ab, welches wiederum endwärtig in ein Loch eines Halters eingesetzt ist. Dabei bildet das Drahtstück endwärtig in dem Loch einen Haken aus, dessen Ende von innen her in Gebrauchslage an dem Halter anschlägt. Hierdurch wird vermieden, dass die Vorrichung aus dem Loch herausrutschen kann.

Vor dem Haken bildet das Drahtstück ein Knie aus, welches in ein Anschlagstück übergeht. Mit dem Anschlagstück stützt sich das Drahtstück von aussen her an dem Halter ab.

Auf das Anschlagstück folgt zwischen der Schlitzreihe und dem Anschlagstück ein Tragstück, welches etwa rechtwinklig von dem Anschlagstück abragt. Bevorzugt soll in das Tragstück eine Schlaufe eingeformt sein, welche einen Druck auf die Schlitzreihe elastisch auffängt.

Mit dieser Vorrichtung findet eine Zugentlastung des Kabels statt, wobei die Dicke des Kabels unerheblich ist. Ferner findet kein Knicken statt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen Vorrichtung zum Führen einer Leitung;
Figur 2 eine vergrösserte perspektivische Ansicht der Vorrichtung zum Führen einer Leitung gemäss Figur 1.

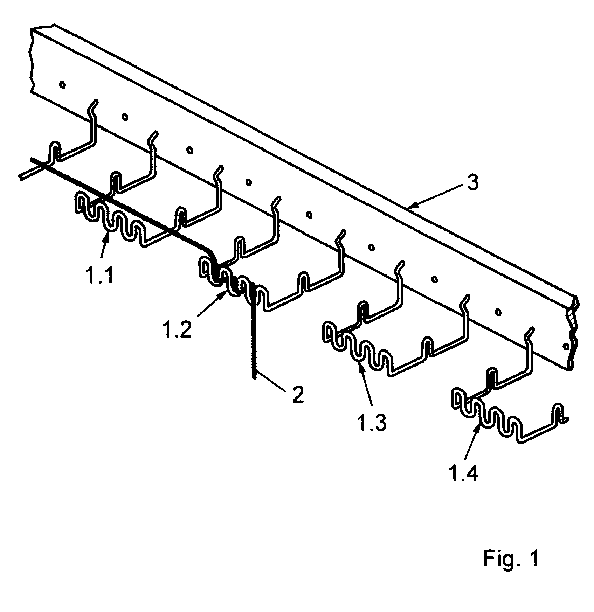

In Figur 1 ist eine Reihe von Vorrichtungen 1.1 bis 1.4 zum Führen einer Leitung, insbesondere eines Kabels 2 gezeigt. Dabei sind die Vorrichtungen 1.1 bis 1.4 zum Führen des Kabels 2 an einem Halter 3 angeordnet.

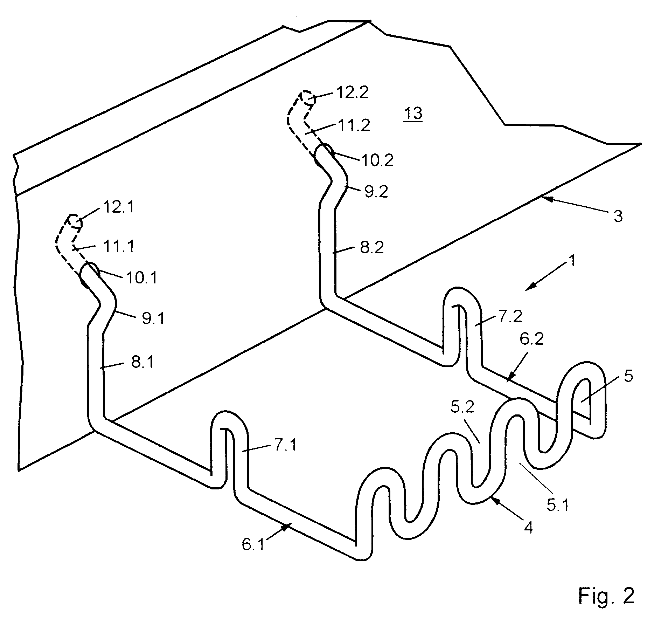

Gemäss Figur 2 besteht jede Vorrichtung 1 zum Führen eines Kabels 2 aus einem einstückigen Draht. Dieser Draht ist an verschiedenen Stellen und zu verschiedenen Zwecken gekrümmt. In jedem Fall besitzt er nach vorne eine Schlitzreihe 4, wobei der Draht in diesem Fall wellenförmig gekrümmt ist. Durch diese wellenförmige Krümmung werden einzelne Schlitze 5 ausgebildet, wobei benachbarte Schlitze 5.1 und 5.2 entgegengesetzt geöffnet sind.

Beidseits schliesst an die Schlitzreihe 4 jeweils ein Tragstück 6.1 und 6.2 an, wobei jedes Tragstück 6.1 bzw. 6.2 etwa in der Mitte einen Schlaufe 7.1 bzw. 7.2. ausbildet.

Jedes Tragstück 6.1 bzw. 6.2 geht in ein davon etwa rechtwinklig abgekantetes Anschlagstück 8.1 und 8.2 über, auf das wiederum ein Knie 9.1 und 9.2 folgt. Das Knie 9.1 bzw. 9.2 erstreckt sich durch ein Loch 10.1 bzw. 10.2 in dem Halter 3 und geht im Inneren des Halters 3 in einen S-förmig entgegengesetzt dem Knie 9.1 bzw. 9.2 gekrümmten Haken 11.1 und 11.2 über. Der Haken 11.1 bzw. 11.2 schlägt mit seinem Ende 12.1 bzw. 12.2 von innen her an dem Halter 3 an.

Die Funktionsweise der vorliegenden Erfindung ist folgende:

Zum Festlegen eines Kabels 2 wird an einem Halter 3, beispielsweise an einem Schreibtisch, Computertisch usw. eine Mehrzahl von erfindungsgemässen Vorrichtungen 1 zum Führen eines Kabels 2 befestigt. Dies geschieht dadurch, dass die Vorrichtung 1 bzw. die Haken 11.1 und 11.2 durch die Löcher 10.1 und 10.2 hindurchgesteckt werden, so dass die Enden 12.1 und 12.2 von innen her an dem Halter 3 anschlagen. Gleichzeitig legen sich die Anschlagstücke 8.1 und 8.2 an eine Oberfläche 13 des Halters 3 an, und die Tragstücke 6.1 und 6.2, welche auch die Schlitzreihe 4 halten, ragen etwa rechtwinklig von dem Halter 3 ab.

Die Schlaufen 7.1 und 7.2 verbessern die Stabilität, da ein Druck auf die Schlitzreihe 4 von den Schlaufen 7.1 und 7.2 elastisch abgefangen wird.

Ein Kabel 2 wird, wie in Figur 1 gezeigt, über benachbarte Vorrichtungen 1.1 zum Führen eines Kabels 2 gelegt, wobei das Kabel etwa parallel zur Schlitzreihe 4 verläuft. Soll das Kabel weggeführt werden, so wird es in die Schlitze 5 der Schlitzreihe 4 eingelegt und zwar bevorzugt in die benachbarten Schlitze eingefädelt, so dass das Kabel auch zwischen benachbarten Schlitzreihen 4.1 und 4.2 mit entgegengesetzt ausgerichteten Öffnungen umgelenkt wird. Hierdurch wird das Kabel so festgelegt, dass eine Zugentlastung stattfindet. Ferner erfolgt kein Knicken des Kabels.

## Patentansprüche

1. Vorrichtung zum Führen einer Leitung (1), insbesondere eines Kabels (2),
dadurch gekennzeichnet,
dass zumindest zwei benachbarte Schlitze (5.1, 5.2) zur Aufnahme der Leitung vorgesehen sind.

2. Vorrichtung nach Anspruch 1, dadurch gekennzeichnet, dass die Schlitze (5.1, 5.2) entgegengesetzt geöffnet sind.

3. Vorrichtung nach Ansporuch 2, dadurch gekennzeichnet, dass ein Draht durch wellenförmiges Verbiegen eine Reihe von benachbarten Schlitzen (5.1, 5.2) ausbildet.

4. Vorrichtung nach Anspruch 3, dadurch gekennzeichnet, dass von der Schlitzreihe (4) beidseits jeweils ein Drahtstück abragt, welches endwärtig in ein Loch (10.1, 10.2) eines Halters (3) eingesetzt ist.

5. Vorrichtung nach Anspruch 4, dadurch gekennzeichnet, dass das Drahtstück endwärtig in dem Loch (10.1, 10.2) einen Haken (11.1, 11.2) ausbildet und mit einem Ende (12.1, 12.2) von innen her an dem Halter (3) anschlägt.

6. Vorrichtung nach Anspruch 5, dadurch gekennzeichnet, dass vor dem Haken (11.1, 11.2) ein Knie (9.1, 9.2) und danach ein Anschlagstück (8.1, 8.2) ausgebildet ist, welches dem Halter (3) anliegt und welches unter Einschluss eines Winkels von etwa 90° in ein Tragstück (6.1, 6.2) übergeht, das an die Schlitzreihe (4) anschliesst.

7. Vorrichtung nach Anspruch 6, dadurch gekennzzeichnet, dass das Tragstück (6.1, 6.2) zumindest eine Schlaufe (7.1, 7.2) ausbildet.
